# EUROPEAN PATENT SPECIFICATION

(11) **EP 0 543 013 B1**
(45) Date of publication and mention of the grant of the patent: **13.12.1995**
(21) Application number: 92909786.3
(22) Date of filing: 15.05.1992
(51) Int. Cl.: B23Q 15/00, G05B 19/41

(54) **METHOD OF PREPARING PROGRAM FOR ROUGH WORKING**
VERFAHREN ZUR HERSTELLUNG EINES PROGRAMMS ZUR GROBBEARBEITUNG
METHODE D'ELABORATION D'UN PROGRAMME DE DEGROSSISSAGE

(30) Priority: 07.06.1991 JP 136130/91
(43) Date of publication of application: 26.05.1993
(73) Proprietor: FANUC LTD., Minamitsuru-gun, Yamanashi 401-05 (JP)
(72) Inventor: SEKI, Masaki, Suginami-ku Tokyo 168 (JP); HAYANAGI, Shizuaki Fanuc Dai-3 Bira-karamatsu, Minamitsuru-gun Yamanashi 401-05 (JP); SUZUKI, Koji Fanuc Dai-3 Bira-karamatsu, Minamitsuru-gun Yamanashi 401-05 (JP)
(74) Representative: Brunner, Michael John
(86) International application number: JP9200635
(87) International publication number: WO9221482

(56) References cited:
- EP-A- 0 151 643
- EP-A- 0 335 975
- EP-A- 0 348 533
- JP-A- 2 071 954
- JP-A- 3 251 364
- JP-A-60 090 653
- JP-A-62 208 858
- PATENT ABSTRACTS OF JAPAN vol. 12, no. 142 (M-692)30 April 1988 &JP-A-62 264 847 (HONDA MOTOR CO. LTD.) 17 November 1987

## Description

This invention relates to a method of preparing a program for carrying out a rough regional cutting operation in which cutting is executed a plurality of times in the direction of a tool axis, and more particularly, to a method of preparing a program for a reciprocative rough regional cutting operation in which a tool is not rapidly moved from a cutting end point to a cutting start point. Such a method is known from EP-A-0 151 643.

### Background Art

In CAD/CAM systems and automatic programming systems having an automatic programming function, a method is employed by which a path for roughly machining a region of a desired shape can be automatically determined. In this method, the rough machining path thus automatically determined is used directly for actual cutting operation or is output as NC data. In some systems, the automatically determined rough machining path can be graphically displayed.

Conventionally, the automatically determined rough machining path includes a sequence of paths, wherein cutting is first executed at a cutting start point in the direction of a tool axis, regional cutting is executed from the cutting start point to a cutting end point in accordance with a specified pattern, and the tool is rapidly moved from the cutting end point to the cutting start point.

The automatically determined rough machining path, however, includes a path a long which the tool is rapidly moved from the cutting end point to the cutting start point, thus increasing the number of blocks in NC data to be output. Further, the total rough machining time increases with the frequency of the rapid tool movement from the cutting end point to the cutting start point.

### Disclosure of the Invention

This invention was contrived in view of the above circumstances, and an object thereof is to provide a method of preparing a rough machining program by which the number of blocks in NC data to be output can be reduced.

Another object of this invention is to provide a method of preparing a rough machining program by which the time for rough regional cutting operation can be shortened.

To achieve the above objects, this invention provides a method of preparing a program for carrying out a rough regional cutting operation in which cutting is executed a plurality of times in the direction of a tool axis, the method comprising cutting to a commanded depth in the direction of the tool axis at a cutting start point, carrying out a regional cutting operation from the cutting start point to a cutting end point, cutting to the commanded depth in the direction of the tool axis at the cutting end point, and carrying out the regional cutting operation in an opposite direction from the cutting end point to the cutting start point.

First, at the cutting start point, cutting to the commanded depth is effected in the direction of the tool axis, and a regional cutting operation is executed from the cutting start point to the cutting end point. Then, at the cutting end point, cutting to the commanded depth is effected in the direction of the tool axis, and the regional cutting operation is executed in the opposite direction from the cutting end point to the cutting start point. Thus, the rapid tool movement can be eliminated.

### Brief Description of the Drawings

FIG. 1 is a diagram illustrating a method of preparing a rough machining program according to this invention;
FIG. 2 is a view illustrating the method of preparing a rough machining program;
FIG. 3 is a block diagram showing the hardware of an automatic programming system for carrying out the invention; and
FIG. 4 is a flowchart showing how a rough machining program is prepared.

### Best Mode of Carrying Out the Invention

An embodiment of this invention will be described with reference to the drawings.

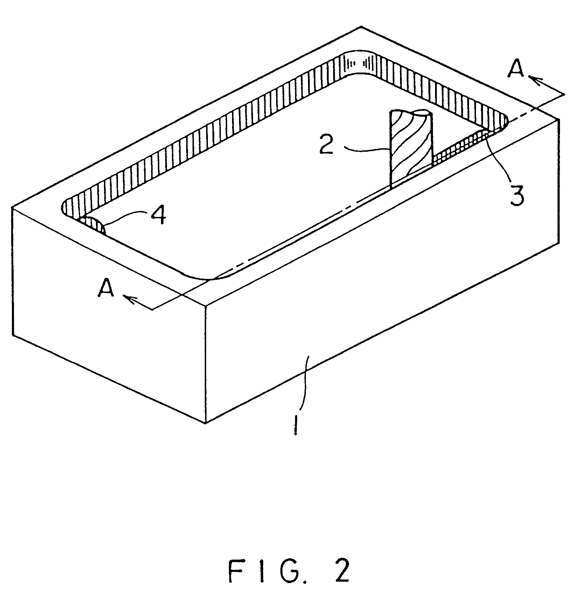

FIG. 2 illustrates a method of preparing a rough machining program according to this invention. Referring to the figure, a pre-drilling hole is first cut at each of a cutting start point 4 and a cutting end point 3 of a workpiece 1. Next, at the cutting start point 4, the workpiece 1 is cut to a commanded depth in the direction of the axis of a cutting tool 2. Then, a cutting operation is carried out from the cutting start point 4 to the cutting end point 3 in accordance with a commanded regional cutting pattern.

Subsequently, at the cutting end point 3, the workpiece 1 is cut to the commanded depth in the axial direction of the cutting tool 2, and a cutting operation is further executed in the opposite direction from the cutting end point 3 to the cutting start point 4 in accordance with the commanded regional cutting pattern.

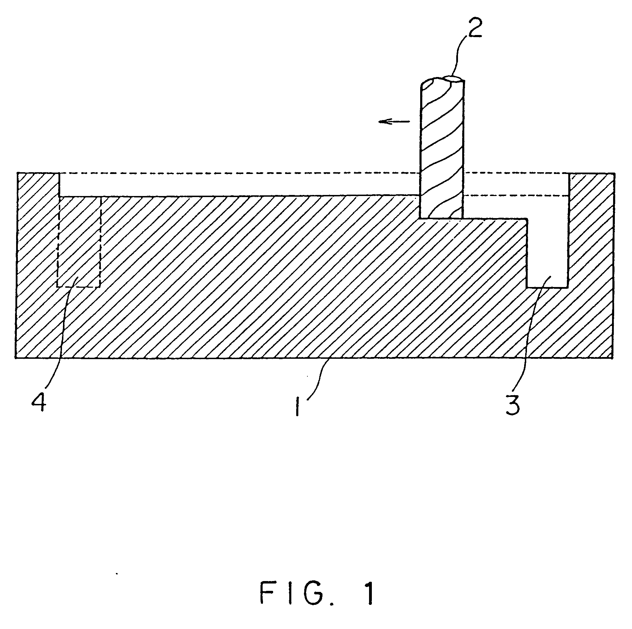

FIG. 1 is a sectional view taken along line A-A in FIG. 2. The pre-drilling hole at each of the cutting start and end points 4 and 3 is as deep as the total machining depth, and is formed by using a drill. For the cutting tool 2, an end mill is used. The depth to which the cutting tool 2 can cut at a time by the regional cutting operation depends on the material of the workpiece 1, but generally is proportional to the diameter of the cutting tool 2. The proportion is set by a system program, or a desired proportion is input by a programmer.

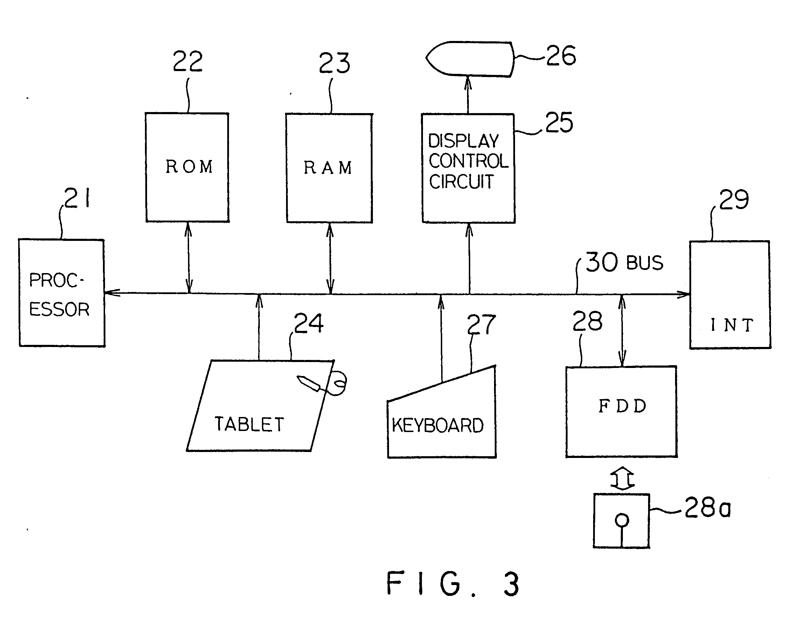

FIG. 3 is a block diagram showing the hardware of an automatic programming system for carrying out this invention. A processor 21 globally controls the automatic programming system in accordance with a control program stored in a ROM 22. The ROM 22 stores other data such as profile information, in addition to the control program for globally controlling the automatic programming system.

A RAM 23 stores a system program loaded from a floppy disk 28a, and other various data. The RAM 23 has a figure data area for storing figure data used for the preparation of drawings and NC data, and a temporary storage area for temporarily storing figure data at the time of erasure or restoration of figure data.

A display control circuit 25 converts the NC data stored in the RAM 23 and other data such as profile data of workpieces, into display signals, and supplies the converted signals to a display device 26. The display device 26 displays the NC data, workpiece profile, or the like. For the display device, a CRT, liquid-crystal display device, or the like is used.

A tablet 24 is used for inputting data such as profile data. A keyboard 27 includes operating keys used for data entry, and software keys whose functions change in accordance with the system program etc.

An FDD (floppy disk drive) 28 drives the floppy disk 28a to input NC data from the floppy disk 28a or to write modified NC data onto the disk 28a.

Prepared NC data can be output to an external printer or the like through an interface 29 to be printed thereby. Other printers such as a plotter, not shown, can be connected via the interface 29.

The aforementioned elements are interconnected by a bus 30.

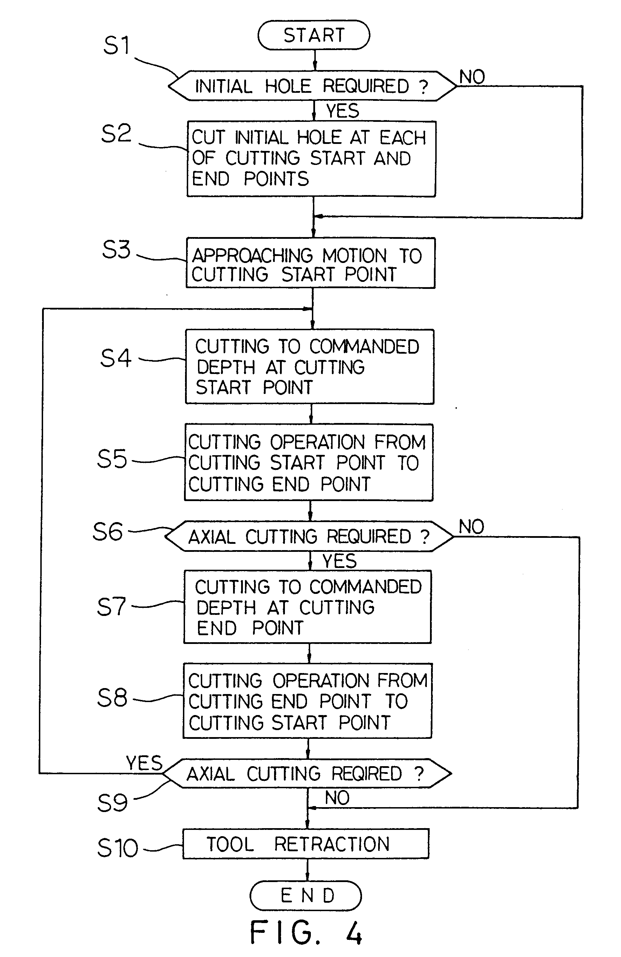

FIG. 4 is a flowchart showing how a rough machining program is prepared. The numbers following "S" denote step numbers.
[S1] Whether pre-drilling hole cutting is specified is checked. This is achieved by determining whether or not a pre-drilling hole cutting command is entered in the machining program prepared interactively. If the pre-drilling hole cutting is specified, the program proceeds to Step S2, and if not, the program proceeds to Step S3.
[S2] NC data is output for cutting a pre-drilling hole at each of the cutting start and end points.
[S3] NC data is output for executing an approaching motion of the tool to the cutting start point.
[S4] NC data is output for cutting the workpiece to the commanded depth at the cutting start point.
[S5] NC data is output for carrying out a cutting operation from the cutting start point to the cutting end point in accordance with the commanded regional cutting pattern.
[S6] Whether an axial cutting for the subsequent regional cutting operation is required at the cutting end point is checked. This is achieved by comparing the total machining depth with a depth to which the regional cutting operation has progressed till then. If the axial cutting is required, the program proceeds to Step S7, and if not, the program proceeds to Step S10.
[S7] NC data is output for cutting the workpiece to the commanded depth at the cutting end point.
[S8] NC data is output for carrying out a cutting operation from the cutting end point to the cutting start point in accordance with the commanded regional cutting pattern.
[S9] Whether an axial cutting for the subsequent regional cutting operation is required at the cutting start point is checked. This is achieved by comparing the total machining depth with a depth to which the regional cutting operation has progressed till then, as in Step S6. If the axial cutting is required, the program proceeds to Step S4, and if not, the program proceeds to Step S10.
[S10] NC data for carrying out a tool retraction is output to thereby end the rough cutting operation.

Thus, at the cutting end point, the workpiece 1 is cut to the commanded depth in the direction of the tool axis, and then, NC data is output for executing a regional cutting operation in the opposite direction from the cutting end point to the cutting start point, whereby the number of blocks of the NC data can be reduced. Further, the NC data to be output does not include data for carrying out a rapid tool movement from the cutting end point to the cutting start point, and thus the rough machining time can be shortened.

In the above description, pre-drilling holes are first cut, and then the rough regional cutting operation is executed. If, however, a cutting tool capable of drilling operation, such as a ball end mill or the like, is used, the rough regional cutting operation can be started without executing the pre-drilling hole cutting.

Further, the machining program or NC data is input from and output to the floppy disk 28a via the FDD 28 shown in FIG. 3, but a large-capacity storage device such as a hard disk may be alternatively used.

As described above, according to this invention, at the cutting end point, the workpiece 1 is cut to the commanded depth in the direction of the tool axis, and then, the regional cutting operation is executed in the opposite direction from the cutting end point to the cutting start point, whereby the number of blocks of the NC data can be reduced. Further, since the rapid tool movement from the cutting end point to the cutting start point is eliminated, the rough machining time can be shortened.

## Claims

1. A method of preparing an NC machining program for carrying out a rough regional cutting operation in which cutting is executed a plurality of times in a direction of a tool axis, the method comprising the steps of:
cutting to a commanded depth in the direction of the tool axis at a cutting start point;
carrying out a regional cutting operation from the cutting start point to a cutting end point;
cutting to the commanded depth in the direction of the tool axis at the cutting end point; and
carrying out the regional cutting operation in an opposite direction from the cutting end point to the cutting start point.

2. A method according to claim 1, wherein, when a pre-drilling hole cutting is specified, a pre-drilling hole is previously cut at each of the cutting start point and the cutting end point.

## Patentansprüche

1. Verfahren zum Herstellen eines numerisch gesteuerten Bearbeitungsprogramms zum Ausführen einer regionalen Grobzerspanung, bei der das Zerspanen mehrfach in Richtung einer Werkzeugachse ausgeführt wird, wobei das Verfahren folgende Schritte aufweist:
Zerspanen in Richtung der Werkzeugachse an einem Zerspanungsstartpunkt bis zu einer anbefohlenen Tiefe;
Ausführen einer regionalen Zerspanung ausgehend von dem Zerspanungsstartpunkt bis zu einem Zerspanungsendpunkt;
Zerspanen in Richtung der Werkzeugachse am Zerspanungsendpunkt bis zu einer anbefohlenen Tiefe und
Ausführen des regionalen Zerspanens in entgegengesetzter Richtung von dem Zerspanungsendpunkt zum Zerspanungsstartpunkt hin.

2. Verfahren nach Anspruch 1, bei dem ein Vorbohrloch sowohl am Zerspanungsstartpunkt wie auch am Zerspanungsendpunkt vorher hergestellt wird, wenn ein Zerspanen mit Vorbohrloch spezifiziert ist.

## Revendications

1. Méthode de préparation d'un programme de travail sur machine-outil à commande numérique pour exécuter une opération régionale de coupe d'ébauche, dans laquelle l'usinage par coupe est réalisé une pluralité de fois dans une direction d'un axe d'outil, la méthode comprenant les étapes consistant à :
usiner par coupe à une profondeur commandée dans la direction de l'axe d'outil en un point de départ d'usinage ;
exécuter une opération régionale d'usinage par coupe à partir du point de départ d'usinage jusqu'à un point final d'usinage ;
usiner par coupe à la profondeur commandée dans la direction de l'axe d'outil au point final d'usinage ; et
exécuter l'opération régionale d'usinage par coupe dans une direction opposée à partir du point final d'usinage jusqu'au point de départ d'usinage.

2. Méthode selon la revendication 1, dans laquelle, lorsqu'un usinage de trou de pré-perçage est spécifié, un trou de pré-perçage est préalablement exécuté à chacun des point de départ d'usinage et point final d'usinage.
